# EUROPEAN PATENT APPLICATION

(11) **EP 3 040 190 A1**
(43) Date of publication of application: **06.07.2016**
(21) Application number: 14200392.0
(22) Date of filing: 29.12.2014
(51) Int. Cl.: B29C 73/02, B25B 11/00

(54) **Support device**

(71) Applicant: Carpe Diem B.V., 5061 JR Oisterwijk (NL)
(72) Inventor: Schellekens, Johannes Wilhelmus Maria, 5283 XV Boxtel (NL)
(74) Representative: 't Jong, Bastiaan Jacob

(57) **Abstract**

The invention relates to a support device (1) comprising:
- a support structure (2) comprising a base element (7);
- a suction cup (4) fixed to the support structure (2);
- a rotatable element (15) arranged to support a tool;
- a connecting element (17), arranged through a first bore in the base element (7) and through a second bore in the rotatable element (15), the connecting element (17) being arranged to rotatably attach the rotatable element (15) to the base element (7) such that the rotatable element (15) and the base element (7) are rotatable with respect to each other around a first direction to obtain relative orientations around the first direction;
characterized by
- the base element (7) and the rotatable element (15) being arranged to mesh and to be locked to each other in a meshing relative orientation around the first direction.

## Description

The invention relates to a support device comprising:
- a support structure
- a suction cup fixed to the support structure;
- a base element fixed to the support structure;
- a rotable element arranged to support a tool;
- a connecting element, arranged through a first bore in the base element and through a second bore in the rotable element, the connecting element being arranged to rotably attach the rotable element to the base element such that the rotable element and the base element are rotable with respect to each other around a first direction to obtain relative orientations around the first direction.

In a support device known from EP0296671A1 comprising a hole for supporting an injector for injecting a resin into a break of a pane a base is attached to a pane using a suction cup that is activated by a handle. The suction cup is attached to a base or support structure. The base comprises a ring that fixed to a frame and that is stepped to confine a disk such that the disk is rotable but not axially movable (in a mounting or axial direction) with respect to the base and therefore with respect to the pane once the suction cup is activated in use.

Two pins protrude out of the disc away from the base. The two pins engage with two corresponding holes in a support element that is mounted on the ring. The support element also comprises an external thread around the axial direction. A nut is screwed on the support element whereby an internal thread of the nut engages with the external thread of the support element.

A bolt runs through axial openings in the nut, the support element, the ring and the disc. An end of the bolt is prevented from leaving a space between the disc and the base by a clamping ring engaging with the bolt.

The support element comprises a slot in a direction perpendicular to the mounting direction. The bolt also runs through a slot in an arm that is placed in the slot in the support element. The arm is clamped between the nut and the support element when the nut is secured to the support element by screwing it tightly onto the support element.

The arm comprises a hole in which an injector for resin can be placed.

The disc also comprises a bore in which a pin is placed that is biased by a spring. An end of the pin can engage with one of a number of recesses provided in a surface of the frame facing the disc.

When the arm is rotated around the bolt in either of the rotational directions, engagement of the pin with one of the recesses enables the user to bring the arm back to an orientation used before.

To be able to rotate the arm and thus the disc and the support element (including the nut), the bolt needs to be loose a bit. In such a situation, the pin can disengage with the recess in either rotational direction.

Because of the number of components between the pin that engages with the recesses and the arm, the tolerance of the orientation of the arm is relatively large and increases further because of wear.

In a support device known from US8721311 a support arm is pivotably hinged to a support structure that can be attached by a suction cup to an attachment surface. The arm has a forwardly pointing part with a hole to support an injector. The arm also has a part that points backward. A pin runs through a through hole in the part of the arm that points backward. The pin can engage with a slot in the support structure and is spring loaded to bias the pin into the slot. As the pin needs to be liftable through the arm, there is space around the pin in the through hole, which makes the positioning less accurate.

The object of the invention is to provide a support device for supporting and positioning a tool in a rotational orientation with improved accuracy.

The object is reached by a support device according to claim 1.

Because the base element and the rotable element are arranged to mesh with each other in at least one meshing orientation of relative rotation around a first direction, the tool can be accurately positioned with respect to the base element. Because they are locked to each other they can be kept in that position.

As the base element is comprised by the support structure and the suction cup is fixed to the support structure, the relative position and orientation of the base element with respect to the suction cup is fixed. Therefore, if the tool is accurately positioned with respect to the base element by the rotable element, it is also accurately positioned with respect to the suction cup. A suction cup is arranged to be attached to a surface (herein an attachment surface) by suction when activated. Thus, when activated the tool is accurately positioned which respect to the attachment surface if in use the suction cup is activated.

The base element may for instance be an element that is fixed to a part of the support structure or form an integral part with the rest of the support structure being for instance extruded or milled as one part.

As the rotable element and the base element mesh, there is no need for an additional element to register the relative orientations such as a pin running through a through hole in the rotable element and engaging in a slot of the base element that can be lowered into and lifted out of the slot. Therefore, the support device according to the invention requires little moving elements, which makes it reliable.

The invention further provides a support device according to claim 2.

Because the base element is fixed to the support structure, a translation of the rotable element relative to the support structure automatically means a translation relative to the base element.

As the rotable element and the support structure can have a distance wherein the rotable element and the base element mesh (i.e. the distance with the first distance value) and additionally can have a distance wherein the rotable element and the base element have a distance large enough to allow relative rotation around the first direction, i.e. wherein they do not longer mesh and don't even engage, (i.e. the distance with the second distance value) the freedom of the rotable element to rotate or to stay in the meshing relative orientation can be controlled by controlling the distance of the rotable element with respect to the support structure.

The reference surface herein is perpendicular to the first direction. The point on the rotable element used to measure the distance is the same when measuring the first distance value and the second distance value.

The invention further provides a support device according to claim 3.

Because the spring is between the annular ring shaped surface and the spring support surface of the rotable element and because those surfaces face each other, the rotable element is biased with respect to the support structure and thus the base element by a spring load. Therefore, a spring force locks the base element and the rotable element to each other and the rotable element retains its orientation with respect to the base once the base element and the rotable element mesh.

It will be clear that if the spring compresses when the distance between the rotable element and the support structure decreases, the spring will extend when the distance between the rotable element and the support structure increases.

In an advantageous embodiment, the rotable element and the support structure are biased towards each other by the spring.

The invention further provides a support device according to claim 4.

Because the connecting element is a bolt that engages with a threaded bore of the base element, the support device can be easily assembled and disassembled. When assembling or disassembling the rotable element to the base element, the base element can either be fixed to the support structure or be detached from the support structure. In fact, the support structure may be exchanged without having to disassemble rotable element from the base element.

The invention further provides a support device according to claim 5.

As the distance between the rotable element and the support structure has a third value that differs from the first value, the distance between the base element differs between the first and further meshing relative orientations. Therefore, the support device can be used to position a tool at different distances from the attachment surface. This is because the distance between the support structure and the attachment surface does not depend on the orientation of the rotable element as the suction cup is fixed to the support structure.

As the rotable element and the base element mesh when the distance between the rotable element and the reference surface has the third value, the third value differs from the second value, as at that value the rotable element and the base element can freely rotate with respect to each other.

In use, the attachment surface will normally be a surface of an object to be treated by the tool, for instance a windshield pane.

The invention further provides a support device according to claim 6.

Because the rotable element is rotable over a rotation angle being equal to or larger than (i.e. at least as large as) the support angle, both the first tool or the second tool can aligned in the first orientational direction.

The invention further provides a support device according to claim 7.

As the second value is larger than zero, the second tool is supported in a direction that differs from the direction in which the first tool is supported. This means that the tools are not in each other's way when used. Still, the first tool and the second tool can be interchangeably aligned in the first orientational direction.

The invention further provides a support device according to claim 8.

By being able to accurately position the second tool when the rotable element and the base element are in the further meshing relative orientation in the same direction as wherein the first tool is when the rotable element and the base element are in the first meshing relative orientation, the support device enables accurate positioning of the first and the second tool in a workflow of a process at different time instances.

The invention further provides a support device according to claim 9.

Because the distance is equal, the first tool and the second tool will alternately be at the same location when either the first tool or the second tool is supported in the first orientational direction.

The invention further provides a support device according to claim 10.

As the second tool can be aligned in the same direction as the first tool by rotation, the light source can be positioned at least close to the position the first tool can take. (In the case of the combination with claim 9, the second tool can even take the place of the first tool.) This means the light only has to travel a short distance to the target surface which makes that the intensity of the light is minimally moderated along the optical path from the light source to the target surface, which makes that the support device is efficient in the use of the light.

The invention further provides a support device according to claim 11.

Because the source emits light at a single wavelength, the energy source can be efficiently used when curing the material applied by the first tool. This is because the lamp can be optimised for efficiently generating the single wavelength. In addition, many materials cure optimally (i.e. requiring the lowest amount of energy per quantity to be cured) at a specific frequency including the materials that may be applied by the first tool.

As the support tool can support both the first tool and the second tool, the light source can cure a material applied by the first tool and because of the rotation can radiate it's light directly towards the target surface and onto the material. Therefore, the light does not have to pass any material of the target surface itself which would lead to energy loss or even to problems wherein the light would not pass the target surface material at all at the frequency at which the material to be cured cures most efficiently.

The invention further provides a support device according to claim 12.

Because the gradient is smaller upon rotation in the first rotational direction than in the second rotational direction, a user will be encouraged to rotate in the first rotational direction in stead of the second rotational direction to rotate away from the meshing relative orientation.

In an advantageous combination with claim 3 or 4, the user is additionally encouraged by the spring force to rotate the rotable element with respect to the base element in a first rotational direction because the spring force will correspondingly vary less by rotation in the rotational direction in which the gradient is smaller than in the rotational direction in which the gradient is larger. Therefore, the user will experience less force while rotating.

The invention further provides a support device according to claim 13.

Because the element of the set of teeth (hence a tooth) can engage with the further recess depending on the relative orientations of the base element and the rotable element, the rotable element can be accurately positioned and in the corresponding meshing relative rotational orientation and further meshing relative rotational orientation.

In an advantageous embodiment, the element of the set of teeth engaging with the further recess is the tooth.

This is advantageous, as a single tooth can be used to accurately position.

In an advantageous combination of the embodiment with the embodiment of claim 3, the rotable element and the base element are locked to each other by a spring force and the rotable element retains its orientation with respect to the base once the base element and the rotable element mesh in the further meshing relative orientation.
The invention further provides a support device according to claim 14.

Obviously, where the rotation angle is 360 degrees, it can also be multiples of 360 degrees, i.e. the rotable element and the base element can be rotated with respect to each other in a single rotational direction over more than 360 degrees, such as 370 degrees, 750 degrees, 1000 degrees etc.

Because the gradient in the second rotational direction is very large (for instance infinite) at the meshing relative orientation, in use always the first rotational direction will be used to rotate away from the meshing relative orientation, especially if the rotable element and the base element are biased into the meshing relative orientation, such as by a spring according to the embodiment of claim 3.

Because the second tool comprises a plug for an electrical energy supply for supplying the light source, it is not necessary to have a wire running from the supply (such as the battery of a car) that may have an orientation in a fixed relationship to the base element to the light source all the time when using the support device. As the rotable element and thus the light source would be rotated over 360 degrees to come back to the meshing relative orientation, the wire would after a number of cycles become too short if the wire would need to be running to the light source all the time. In stead, because of the plug, the wire can be plugged in when the light source is positioned to emit light towards the target surface and emitting light is required and can be unplugged when it is not.

An additional advantage is, that the second tool can be kept light and the support device does not have to support the supply. This makes the support device easier to handle and the attachment by suction even more reliable.

Embodiments of the invention will now be described by way of example only, with reference to the accompanying schematic drawings in which corresponding symbols indicate corresponding parts. Some features may be exaggerated to better illustrate or explain the invention.

To describe the example, a Cartesian coordinate system will be used with coordinate axes an x-direction, a y-direction and a z-direction in a right-handed orientation. The positive z-direction is used for a vertical, upward direction. Thus the negative z-direction is the direction of the force gravity on an object.
Figure 1 shows a cross section of the support device

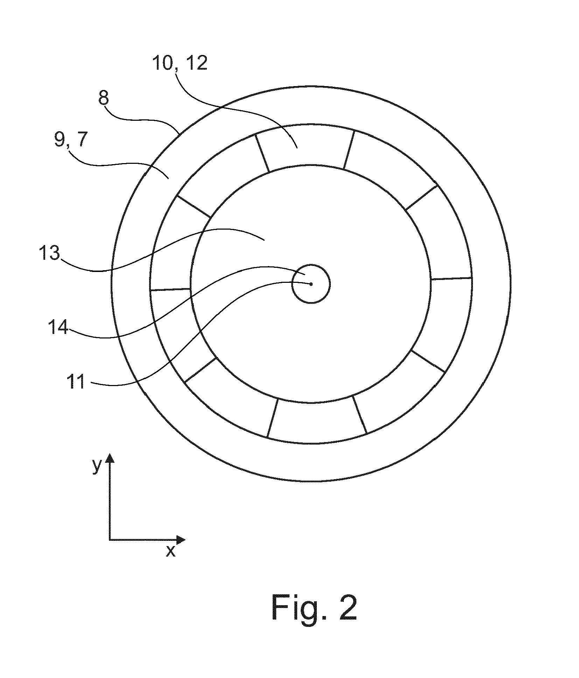

Figure 2 shows a cross section of the support device in another direction
Figure 3 shows a schematic of the orientations of the first arm and the second arm of the rotable element of the support device
Figure 4 depicts a graph of the distance between the rotable element and a reference plane of the support structure

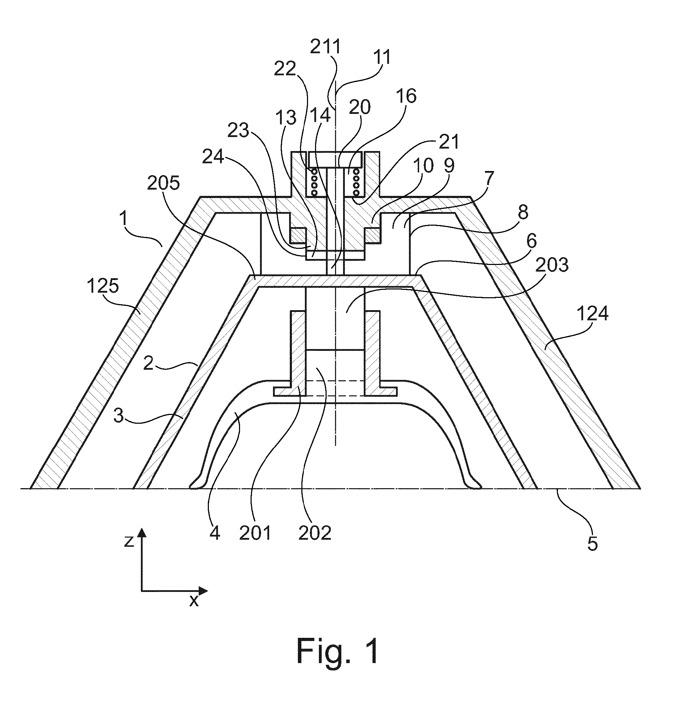

In an example according to an embodiment of the invention, a support device (1) comprises a support structure (2) with 3 legs (3). Figure 1 shows the support device (1). A suction cup (4) is fixed to the support structure (2). The suction cup comprises a central opening in which a foot (201) is fitted. The foot, that is part of the support structure (2), comprises a bore (202). A cylindrical element (203) of the support structure (2) is fitted into the bore (202) of the foot (201). The cylindrical element (203) is fixed to a frame (205) of the support structure (2) with screws. The foot (201) is retractable by the use of a handle (not shown) such that the suction cup (4) can be moved to and from the frame (205). However, the suction (4) cannot rotate with respect to the frame (205). When the suction cup (4) is placed on an attachment surface (5), such as a pane of a car, the suction cup (4) can be operated by the handle (not shown) in a known way to create a vacuum between the suction cup (4) and the attachment surface (5). In this situation, the legs (3) of the support structure (2) are pressed against the attachment surface (5) because of the vacuum. Figure 1 shows the support device (1) attached to the pane after operating the handle.

The support structure (2) has an upper support structure surface (6) facing away from the attachment surface (5). The support surface (6) has a number of through holes.

A base element (7) comprised by the support structure is fixed to the upper support structure surface (6) by a number of screws running through the through holes into threaded bores of the base element (7).

The base element (7) has a circular circumference (8) and a wall (9) surrounding a first bore (10). The circular circumference (8) is perpendicular to a centre line (11). The first bore (10) has a disk shaped cross section of which the centre coincides with the centre line (11).

In this example the first bore (10) runs in the negative z-direction.

The first bore (10) has a first bottom surface (12), the projection of which in the z-direction is an annular ring.

A further bore (13) extends centrally from the first bore (10) in negative z-direction. The further bore (13) is cylindrical having a first cylinder axis that runs through the centre line (11) along the z-direction. The further bore (13) has a further bottom surface formed as an annular ring. An additional bore (14) extends in negative z-direction from the further bottom surface. The additional bore (14) is cylindrical having a second cylinder axis that coincides with the centre axis (11) and is parallel to the z-direction. The additional bore (14) is threaded. Herein, the z-direction is a first direction.

A rotable element (15) is supported by the base element (7). The rotable element (15) comprises a second bore (16). A connecting element (17) is a bolt (17) that comprises a head (18) and a body (19). The body (19) runs through the second bore (16), the bore (10), the further bore (13) into the additional bore (14). The body (19) has a threaded end that corresponds to the threaded additional bore (14) to which it is attached during assembly by rotating the bolt (17) using a hex key inserted into a hexagonal socket in the head (18).

The rotable element (15) and the base element (7) are rotable with respect to each other around a rotational axis (211) that is the same as the centre line (11).

The head (18) comprises an annular ring shaped surface (20) around the body (19). The rotable element (15) comprises a spring support surface (21). The spring support surface (21) and the annular ring shaped surface (20) face each other. A spring (22) is held in compressed state between the spring support surface (21) and the annular ring shaped surface (20).

The rotable element (15) comprises a cylindrical protrusion (23) engaging with a wall (24) of the further bore (13).

The first bottom surface (12) of the first bore (10) is not flat, but comprises a number of recesses. The rotable element (15) comprises a set if teeth. In this example the set of teeth comprises a single tooth. The tooth can engage with any of the recesses into which it is biased by the spring (22) in which case the base element (7) and the rotable element (15) mesh.

The number of recesses comprises a first recess and a second recess. When the tooth engages with the first recess and is locked in the first recess by the spring force of the spring (22), the rotable element (15) and the base element (7) are in a meshing relative orientation (31) around the z-direction (i.e. the first direction).

When the tooth is locked into the first recess, the rotable element (15) is at a distance having a first distance value from the support surface (6) of the support structure (2), here corresponding to a distance between the meshing element of the rotable element (15), i.e. the tooth, and the support surface (6). The support surface (6) forms a reference surface of the support structure (2).

By pulling the rotable element (15) in the positive z-direction, the distance between the rotable element (15) and the support surface (6) can be increased to a second distance value. In the situation where the distance has the second distance value, the tooth is no longer in the first recess and the rotable element (15) can be freely rotated with respect to the base element (7) over a rotation angle having a first value, the value corresponding to 360 degrees.

By pulling the rotable element (15) away from the support surface (6) the spring (22) is compressed. The spring (22) will extend when the tooth enters the first recess or the second recess.

When the tooth (29) is locked into the second recess (30), the distance between the rotable element (15) and the support surface (6) has a third distance value. In this situation, the rotable element (15) and the base element (6) mesh in a further meshing relative orientation (32). The third distance value is smaller than the second distance value and that is larger than the first distance value.

The rotable element (15) comprises a first arm (124), a second arm (125) and a third arm. The first arm (124), the second arm (125) and the third arm are each arranged to support a tool: the first arm (124) is arranged to support a first tool, the second arm (125) is arranged to support a second tool.

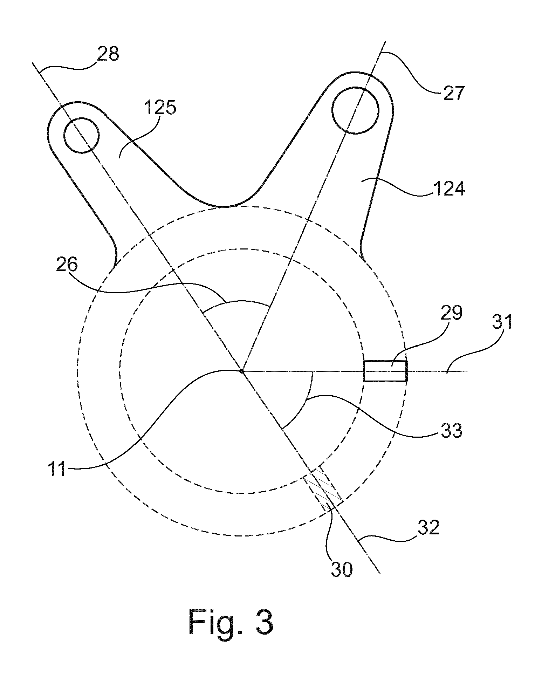

When the rotable element (15) and the base element (7) are in the meshing relative orientation (31) around the z-direction, the first arm (124) supports the first tool in a first orientational direction (27) and at a first location and the second arm (125) supports the second tool in the second orientational direction (28) at a second location. The first orientational direction (27) and the second orientational direction (28) differ by a support angle (26). The support angle (26) is shown in figure 3 and has a second value, which thus is larger than zero.

Here the first location and the second location are locations in a plane perpendicular to the rotational axis (211).

The angle (33) between the meshing relative orientation (31) and the further meshing relative orientation (32) has a third value. The third value corresponds to the second value in that when rotating the rotable element (15) and from the orientation wherein the tooth (29) meshes with the first recess to the orientation wherein the tooth (29) meshes with the second recess (32), i.e. by changing from the meshing relative orientation (31) to the further meshing relative orientation (32), the second tool is supported in the first orientational direction (27).

The distance from the first location to the rotational axis (211) is equal to the distance from the second location to the rotational axis (211). Therefore, when changing from the meshing relative orientation (31) to the further meshing relative orientation (32), the second tool is supported in the first orientational direction (27) at the location in the plane perpendicular to the rotational axis (211) previously occupied by the first tool.

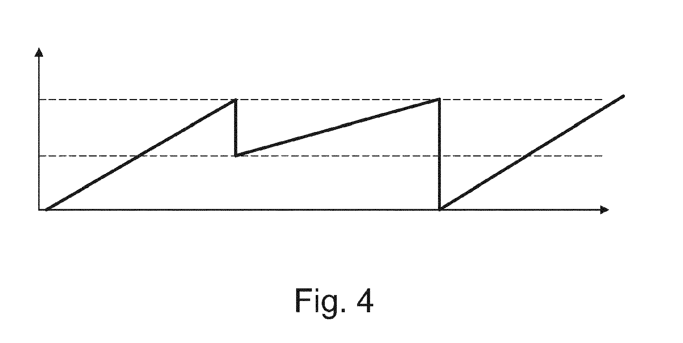

The first bottom surface (12) and the number of recesses (including the first recess and the second recess (30) have a shape such that the distance between the rotable element (15) and the reference surface (6) gradually increases from a meshing locked orientation to a maximum (i.e. it has a finite gradient) and then suddenly decreases again when the rotable element (15) is rotated such that it remains in contact with the first bottom surface (12). Figure 4 shows a graph of the distance when rotating the rotable element (15) while maintaining contact between the rotable element (15) and the first bottom surface (12). The vertical axis corresponds to the distance, the horizontal axis corresponds to a continuously increasing angle of rotation. Where the distance decreases suddenly, the gradient of the distance over the rotation angle is infinite.

The first tool is an injector for a resin. The resin can be used to repair cracks in a pane of a car, such as the front windshield. The pane comprises 3 layers: an exterior glass layer, a film and an interior glass layer. The exterior glass layer comprises a crack at a target surface that is part of the attachment surface that is to be repaired. The attachment surface is an outer surface of the plane. The second tool is a lamp. The lamp comprises a housing that can be attached to the second arm (125). The housing comprises an LED that emits light at a single frequency that corresponds to the frequency at which the resin cures optimally.

The housing also comprises a power plug to receive electrical energy from an electrical energy supply, the power plug connected to the LED to supply the LED with electric energy. When the suction cup is attached to the pane of a car, the electrical energy supply for instance is the battery of the car.

In an example of the use of the support device, the suction cup is activated to attach the support device to an attachment surface and the injector is positioned over the target surface. The attachment surface is the outer surface of a front windshield of a car that has a crack at the target surface to be repaired. Then resin is injected into the crack while the rotable element (15) and the base element (7) mesh in the meshing relative orientation. In this orientation, the rotable element and the reference surface (i.e. support surface (6)) are at a distance with the first distance value. Because the light source is supported in a different direction from the centre line (11) than the first tool (the injector), the light source is far away from the target surface and if light were to travel along an optical path from the light source to the target surface, the optical path would be long.

After injecting the resin, the rotable element is rotated in the first rotational direction such that the rotable element (15) and the base element (7) mesh in the meshing further relative orientation.

In this orientation, the rotable element and the reference surface (i.e. support surface (6)) are at a distance with the third distance value. At this value of the distance, the injector is further away from the attachment surface (5) preventing any unwanted contact between remains of the resin on the tip of the injector and the attachment surface (5).

In this orientation, the battery of the car is connected to the plug of the second tool by a cable, the light source is switched on and the resin cures under the influence of the light emitted by the light source.

In this orientation, i.e. after the rotation, the optical path from light emitted by the light source to the target surface is much shorter then in the previous orientation.

After curing, the light source is switched off, the cable is unplugged and the support device is removed by deactivating the suction cup. When using the support device for a next crack, the suction cup (4) is used to attach the support device again and the injector is positioned over the next crack by rotating the rotable element (15) with respect to the base element (7) further in the first rotational direction.

## Claims

1. Support device comprising:
- a support structure comprising a base element;
- a suction cup fixed to the support structure;
- a rotable element arranged to support a tool;
- a connecting element, arranged through a first bore in the base element and through a second bore in the rotable element, the connecting element being arranged to rotably attach the rotable element to the base element such that the rotable element and the base element are rotable with respect to each other around a first direction to obtain relative orientations around the first direction;
**characterized by**
- the base element and the rotable element being arranged to mesh and to be locked to each other in a meshing relative orientation around the first direction.

2. Support device according to claim 1, wherein
- the support structure and the rotable element are arranged to move with respect to each other in the first direction between a first distance value of a distance between the rotable element and a reference surface of the support structure wherein the rotable element and the base element mesh in the meshing relative orientation and a second distance value of the distance between the rotable element and the reference surface wherein the base element and the rotable element are at a distance large enough to allow relative rotation around the first direction.

3. Support device according to claim 2, wherein
- the connecting element comprises a body extending through the first bore and an annular ring shaped surface around the body, the body being attached to the base element at a first end of the body;
- the rotable element comprises a spring support surface, the annular ring shaped surface and the spring support surface facing towards each other;
- the support device comprising a spring arranged between the annular ring shaped surface and a spring support surface of the rotable element, the spring being arranged to extend and compress when the distance between the rotable element and the support structure changes.

4. Support device according to claim 3, wherein the connecting element is a bolt comprising a body and a head; the body extending into and engaging with a threaded bore of the base element with the first end of the body.

5. Support device according to claim 2,3 or 4, wherein
- the suction cup is arranged to be attached to an attachment surface;
- the base element and the rotable element are arranged to mesh in a further meshing relative orientation around the first direction;
- the distance between the rotable element and the support structure having a third distance value when the rotable element and the base element mesh in the further meshing relative orientation, the third distance differing from the first distance.

6. Support device according to any of the preceding claims; wherein:
- the rotable element is rotable over a rotation angle having a first value, the rotable element arranged to support a first tool at a first location in a first orientational direction when the rotable element and the base element have the meshing relative orientation around the first direction;
the rotable element further being arranged to support a second tool at a second location in a second orientational direction when the rotable element and the base element have the meshing relative orientation around the first direction, the second orientational direction being at a support angle (26) to the first orientational direction, the support angle (26) having a second value;
the first value being equal to or larger than the second value.

7. Support device according to claim 6; wherein the second value is larger than zero.

8. Support device according to claim 7; wherein
- the rotable element and the base element mesh in a further meshing relative orientation;
- the angle between the meshing relative orientation and the further meshing relative orientation has a third value;
- the third value corresponds to the second value such that the rotable element can be rotated with respect to the base element such that the second tool can be supported in the first orientational direction when the rotable element and the base element mesh in the further meshing relative orientation.

9. Support device according to claim 8; wherein the rotable element and the base element rotate with respect to each other around a rotational axis; and the distance from the first location to the rotational axis is equal to the distance from the second location to the rotational axis.

10. Support device according to any of the claims 6 to 9;
- wherein the suction cup is arranged to be attached to an attachment surface of an object; and comprising
- the first tool, the first tool comprising means for applying a material to a target surface of the object; and
- the second tool, the second tool comprising a light source for emitting light towards the target surface when the rotable element and the base element mesh in the further meshing relative orientation.

11. Support device according to claim 10, wherein the light source is arranged to emit light at a single wavelength.

12. Support device according to any of the preceding claims, wherein
- the rotable element and the base element are arranged to mesh by a tooth engaging with a recess of an engagement surface at the meshing relative orientation,
- at the meshing relative orientation, the gradient of the distance being smaller upon rotation of the rotable element in first rotational direction with respect to the base element than upon rotation of the rotable element in a second rotational direction with respect to the base element.

13. Support device according to claim 12, wherein the tooth is an element of a set of teeth; and
the rotable element and the base element are arranged to mesh by an element of the set of teeth engaging with a further recess at a further meshing relative orientation.

14. Support device according to claim 10 and either claim 12 or 13, wherein
- the rotation angle is 360 degrees,
- the gradient in the second rotational direction is very large at the meshing relative orientation, and
- the support device comprises the second tool, the second tool comprising a plug for an electrical energy supply for supplying the light source.
